# EUROPEAN PATENT APPLICATION

(11) **EP 4 839 002 A1**
(43) Date of publication of application: **11.11.2026**
(21) Application number: 25747635.8
(22) Date of filing: 21.01.2025
(51) Int. Cl.: H04W 76/14

(54) **COMMUNICATION METHOD AND APPARATUS, AND DEVICE AND READABLE STORAGE MEDIUM**

(30) Priority: 04.02.2024 CN 202410155721
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHANG, Shuyuan, Beijing 100032 (CN); LIU, Guangyi, Beijing 100032 (CN); WANG, Qixing, Beijing 100032 (CN); CUI, Chunfeng, Beijing 100032 (CN); LI, Na, Beijing 100032 (CN)
(74) Representative: Hertin und Partner Rechts- und Patentanwälte PartG mbB
(86) International application number: PCT/CN2025/073601
(87) International publication number: WO 2025/162063

(57) **Abstract**

This disclosure provides a communication method and apparatus, and device and readable storage medium, and relates to the field of communication technology. The method is performed by a network device, the network device including a centralized unit xNB-CU and a distributed unit xNB-DU; and the method includes: the xNB-CU receives a first message from a core network device; the xNB-CU interacts with the xNB-DU based on the first message, to execute a bearer establishment process; and the xNB-CU sends a second message to the core network device, wherein the second message is configured to indicate completion of bearer establishment.

## Description

### CROSS-REFERENCE TO RELATED APPLICATION

This application claims priority to Chinese Patent Application No. 202410155721.3, filed in China on February 4, 2024, disclosure of which is incorporated herein by reference in its entirety.

### TECHNICAL FIELD

This disclosure relates to the field of communication technology, and in particular to a communication method and apparatus, and device and readable storage medium.

### BACKGROUND

The 5th Generation Mobile Communication Technology (5G) protocol architecture discussion ultimately defined a base station architecture including a distributed unit (DU) and a central unit (CU). This architectural split dictates that the Packet Data Convergence Protocol (PDCP) function and all layers above the PDCP reside in the CU, while Radio Link Control (RLC) and all layers below the RLC reside in the DU. The interface between the CU and DU is defined as F1, which is supported by the Internet Protocol (IP) transport network layer. It is defined that the transport network layer is carried over the network operator's underlying Ethernet network.

In the current architecture, the CU-UP function is part of the CU, and the data base station function and the control base station function are closely integrated. When separated into data base stations and control base stations, the control signaling is complex.

### SUMMARY

Embodiments of this disclosure provide a communication method and apparatus, and device and readable storage medium, to save signaling resources.

In a first aspect, an embodiment of this disclosure provides a communication method performed by a network device, the network device including a centralized unit xNB-CU and a distributed unit xNB-DU, wherein the method includes:
receiving, by the xNB-CU, a first message from a core network device;
interacting, by the xNB-CU, with the xNB-DU based on the first message, to execute a bearer establishment process;
sending, by the xNB-CU, a second message to the core network device, the second message being configured to indicate completion of bearer establishment.

Optionally, the first message includes one or more of the following:
information of an uplink data transmission channel over N3 interface;
information of a quality of service (QoS) flow carried on the channel.

Optionally, interacting, by the xNB-CU, with the xNB-DU based on the first message to execute the bearer establishment process includes:
sending, by the xNB-CU, a third message to the xNB-DU, the third message including information of an uplink data transmission channel over N3 interface;
interacting, by the xNB-DU, with a terminal based on the third message to establish a bearer; and
sending, by the xNB-DU, a fourth message to the xNB-CU, the fourth message being configured to indicate the completion of bearer establishment.

Optionally, interacting, by the xNB-DU, with the terminal based on the third message to establish the bearer includes:
completing, by the xNB-DU, generation, encoding, and encryption of a fifth message based on the third message, the fifth message being configured to indicate that the bearer is to be established;
sending, by the xNB-DU, the fifth message to the terminal; and
receiving, by the xNB-DU, a sixth message sent by the terminal.

Optionally, the fifth message includes:
a mapping relationship between DRBs and QoS flows.

Optionally, the fourth message includes:
information of one or more DRB-based downlink data transmission channels allocated by the xNB-DU.

Optionally, the second message includes information of one or more DRB-based downlink data transmission channels allocated by the xNB-DU.

Optionally, the xNB-CU corresponds to a radio resource control RRC protocol layer; and
the xNB-DU corresponds to the following protocol layers:
PDCP;
RLC;
Media Access Control (MAC);
Physical layer (PHY).

In a second aspect, an embodiment of this disclosure provides a communication method performed by a core network device, wherein the method includes:
sending a first message to an xNB-CU of a network device; and
receiving a second message sent by the xNB-CU, the second message being configured to indicate completion of bearer establishment.

Optionally, the first message includes one or more of the following:
information of an uplink data transmission channel over N3 interface;
information of a QoS flow carried on the channel.

Optionally, the second message includes information of one or more DRB-based downlink data transmission channels allocated by an xNB-DU of the network device.

In a third aspect, an embodiment of this disclosure provides a communication method performed by a terminal, wherein the method includes:
receiving a fifth message sent by an xNB-DU of a network device, the fifth message being configured to indicate that a bearer is to be established; and
sending a sixth message to the xNB-DU based on the fifth message;
wherein the xNB-DU of the network device sends the fifth message in response to a triggering of an xNB-CU of the network device; the xNB-CU triggers the xNB-DU of the network device to send the fifth message upon receiving a first message from a core network device.

Optionally, the fifth message includes:
a mapping relationship between data radio bearers DRBs and QoS flows.

In a fourth aspect, an embodiment of this disclosure provides a communication apparatus applied to a network device, the network device including a centralized unit xNB-CU and a distributed unit xNB-DU;
the xNB-CU is configured to receive a first message from a core network device;
the xNB-CU is configured to interact with the xNB-DU based on the first message to execute a bearer establishment process;
the xNB-CU is configured to send a second message to the core network device, the second message being configured to indicate completion of bearer establishment.

Optionally, the first message includes one or more of the following:
information of an uplink data transmission channel over N3 interface;
information of a QoS flow carried on the channel.

Optionally, the xNB-CU is further configured to send a third message to the xNB-DU, the third message including information of an uplink data transmission channel over N3 interface;
the xNB-DU is further configured to interact with the terminal based on the third message to establish a bearer;
the xNB-DU is further configured to send a fourth message to the xNB-CU, the fourth message being configured to indicate the completion of bearer establishment.

Optionally, the xNB-DU is further configured to, based on the third message, complete the generation, encoding, and encryption of a fifth message, wherein the fifth message is configured to indicate that a bearer is to be established;
the xNB-DU is further configured to send the fifth message to the terminal;
the xNB-DU is further configured to receive a sixth message sent by the terminal.

Optionally, the fifth message includes:
a mapping relationship between DRBs and QoS flows.

Optionally, the fourth message includes:
information of one or more DRB-based downlink data transmission channels allocated by the xNB-DU.

Optionally, the second message includes information of one or more DRB-based downlink data transmission channels allocated by the xNB-DU.

Optionally, the xNB-CU corresponds to the RRC protocol layer;
the xNB-DU corresponds to the following protocol layers:
PDCP;
RLC;
MAC;
PHY.

In a fifth aspect, an embodiment of this disclosure provides a communication apparatus applied to a core network device, the apparatus including:
a first sending module, configured to send a first message to an xNB-CU of a network device;
a first receiving module, configured to receive a second message sent by the xNB-CU, the second message being configured to indicate completion of bearer establishment.

Optionally, the first message includes one or more of the following:
information of an uplink data transmission channel over N3 interface;
information of a QoS flow carried on the channel.

Optionally, the second message includes information of one or more DRB-based downlink data transmission channels allocated by an xNB-DU of the network device.

In a sixth aspect, an embodiment of this disclosure provides a communication apparatus applied to a terminal, the apparatus including:
a first receiving module, configured to receive a fifth message sent by an xNB-DU of a network device, the fifth message being configured to indicate that a bearer is to be established;
a first sending module, configured to send a sixth message to the xNB-DU based on the fifth message;
wherein the xNB-DU of the network device sends the fifth message in response to a triggering of an xNB-CU of the network device; the xNB-CU triggers the xNB-DU of the network device to send the fifth message upon receiving a first message from a core network device.

Optionally, the fifth message includes:
a mapping relationship between DRBs and QoS flows.

In a seventh aspect, an embodiment of this disclosure provides a communication apparatus applied to a network device, the network device including a processor and a transceiver; wherein
the processor is configured to receive a first message from a core network device via an xNB-CU of the network device, interact with an xNB-DU of the network device via the xNB-CU based on the first message to execute a bearer establishment process, and send a second message to the core network device via the xNB-CU, the second message being configured to indicate completion of bearer establishment.

Optionally, the first message includes one or more of the following:
information of an uplink data transmission channel over N3 interface;
information of a QoS flow carried on the channel.

Optionally, the processor is further configured to:
send, via the xNB-CU, a third message to the xNB-DU, the third message including information of an uplink data transmission channel over N3 interface;
interact, via the xNB-DU, with a terminal based on the third message to establish a bearer;
send, via the xNB-DU, a fourth message to the xNB-CU, the fourth message indicating the completion of bearer establishment.

Optionally, the processor is further configured to:
complete, via the xNB-DU, generation, encoding, and encryption of a fifth message based on the third message, the fifth message being configured to indicate that the bearer is to be established;
send, via the xNB-DU, the fifth message to the terminal; and
receive, via the xNB-DU, a sixth message sent by the terminal.

Optionally, the fifth message includes:
a mapping relationship between DRBs and QoS flows.

Optionally, the fourth message includes:
information of one or more DRB-based downlink data transmission channels allocated by the xNB-DU.

Optionally, the second message includes information of one or more DRB-based downlink data transmission channels allocated by the xNB-DU.

Optionally, the xNB-CU corresponds to the RRC protocol layer;
the xNB-DU corresponds to the following protocol layers:
PDCP;
RLC;
MAC;
PHY.

In an eighth aspect, an embodiment of this disclosure provides a communication apparatus applied to a core network device, the apparatus including a processor and a transceiver; wherein
the processor is configured to send a first message to an xNB-CU of a network device, and receive a second message sent by the xNB-CU, the second message being configured to indicate completion of bearer establishment.

Optionally, the first message includes one or more of the following:
information of an uplink data transmission channel over N3 interface;
information of a QoS flow carried on the channel.

Optionally, the second message includes information of one or more DRB-based downlink data transmission channels allocated by an xNB-DU of the network device.

In a ninth aspect, an embodiment of this disclosure provides a communication apparatus applied to a terminal, the apparatus including a processor and a transceiver; wherein
the processor is configured to receive a fifth message sent by an xNB-DU of a network device, the fifth message being configured to indicate that a bearer is to be established, and the processor is configured to send a sixth message to the xNB-DU based on the fifth message;
wherein the xNB-DU of the network device sends the fifth message in response to a triggering of an xNB-CU of the network device; the xNB-CU triggers the xNB-DU of the network device to send the fifth message upon receiving a first message from a core network device.

Optionally, the fifth message includes:
a mapping relationship between data radio bearers DRBs and QoS flows.

In a tenth aspect, an embodiment of this disclosure provides a communication device, including: a memory, a processor, and a program stored in the memory and executable on the processor, wherein the processor executes the program to implement the steps in the communication methods described above.

In an eleventh aspect, an embodiment of this disclosure provides a readable storage medium storing a program, wherein the program, when executed by a processor, implements the steps in the communication methods described above.

In a twelfth aspect, an embodiment of this disclosure provides a computer program product, including computer instructions, wherein the computer instructions, when executed by a processor, implement the steps in the communication methods described above.

In the embodiments of this disclosure, the network device includes an xNB-CU and an xNB-DU. During bearer establishment, the xNB-CU receives a first message from the core network device and interacts with the xNB-DU to execute the bearer establishment process. Afterward, the xNB-CU sends a second message to the core network device, indicating that the bearer establishment is completed. As can be seen from the above description, by achieving complete separation between the data plane and the user plane, signaling resources used during the bearer establishment process can be reduced.

### BRIEF DESCRIPTION OF THE DRAWINGS

Fig. 1 is a first flowchart of a communication method according to an embodiment of this disclosure;
Fig. 2 is a schematic diagram of a conventional communication architecture;
Fig. 3 is a schematic diagram of a communication architecture according to an embodiment of this disclosure;
Fig. 4 is a second flowchart of a communication method according to an embodiment of this disclosure;
Fig. 5 is a third flowchart of a communication method according to an embodiment of this disclosure;
Fig. 6 is a fourth flowchart of a communication method according to an embodiment of this disclosure;
Figs. 7(a) and 7(b) are schematic diagrams of data packet header under the conventional architecture and data packet header under the architecture according to the embodiments of the present disclosure;
Fig. 8 is a first structural diagram of a communication apparatus according to an embodiment of this disclosure;
Fig. 9 is a second structural diagram of a communication apparatus according to an embodiment of this disclosure;
Fig. 10 is a third structural diagram of a communication apparatus according to an embodiment of this disclosure;
Fig. 11 is a fourth structural diagram of a communication apparatus according to an embodiment of this disclosure;
Fig. 12 is a fifth structural diagram of a communication apparatus according to an embodiment of this disclosure;
Fig. 13 is a sixth structural diagram of a communication apparatus according to an embodiment of this disclosure.

### DETAILED DESCRIPTION

In embodiments of this disclosure, the term "and/or" describes the relationship between related objects, indicating that three relationships can exist. For example, A and/or B can represent three cases: A alone, A and B simultaneously, and B alone. The character "/" generally indicates that the preceding and following related objects have an "or" relationship.

In embodiments of this disclosure, the term "multiple" refers to two or more, and other quantifiers are similar.

Technical solution of embodiments of this disclosure will be clearly and thoroughly described below with reference to the accompanying drawings. Obviously, the described embodiments are only some embodiments of this disclosure, and not all embodiments. Based on the embodiments of this disclosure, all other embodiments obtained by those of ordinary skill in the art without creative effort are within the scope of protection of this disclosure.

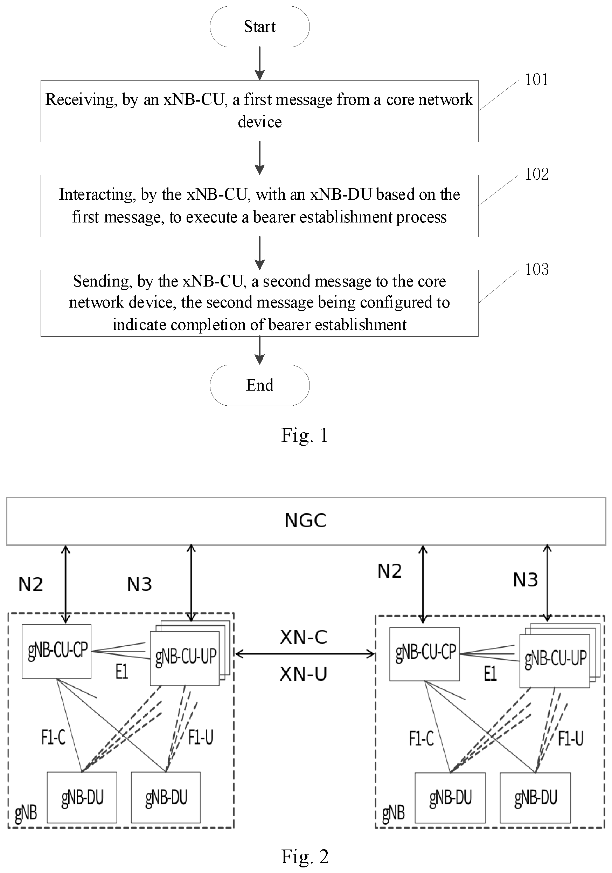

Referring to Fig. 1, Fig. 1 is a flowchart of a communication method according to an embodiment of this disclosure. The method is performed by a network device. The network device includes a centralized unit xNB-CU and a distributed unit xNB-DU. As shown in Fig. 1, the method includes the following steps 101, 102 and 103.

Step 101: receiving, by the xNB-CU, a first message from a core network device.

The network device may be, for example, a base station. The first message may be, for example, a Protocol Data Unit (PDU) session resource setup request (PDU Sessionresource setup request). The first message includes one or more of the following:
information of an uplink data transmission channel over N3 interface (UL NG-U UP TNL Information);
information of a QoS flow carried on the channel (such as a QoS Flow Setup Request List);
where UL stands for Uplink; NG-U stands for 5G Next Generation User Plane Function; UP stands for User Plane; TNL stands for Transport Network Layer.

Fig. 2 is a schematic diagram of the conventional 5G communication architecture. In the architecture shown in Fig. 2, the protocol description indicates that PDCP is executed in the CU, and there is a separation between the F1 control plane and the F1 user plane, protected by the control plane PDCP (PDCP-C) and the user plane PDCP (PDCP-U). 5G introduces a new user plane protocol layer Service Data Adaptation Protocol (SDAP) to handle the mapping relationship between QoS flows and DRBs and the QoS flow identification (ID) in the flow-based QoS service framework of the Radio Access Network (RAN). The SDAP is located above the user plane PDCP layer. The conventional architecture has the following problems.
1. The CU-UP function is part of the CU, and the control plane and user plane are not completely separated, which causes problems when multi-frequency networking: 1.1) The CU includes user plane functions, which leads to the close integration of data base station and control base station functions. When separated into data base station and control base station, the control signaling is complicated; 1.2) CU-UP data processing will become a bottleneck in 6th Generation Mobile Communication Technology (6G).
2. The functional characteristics are not cohesive. Both PDCP-C and PDCP-U functions have encryption and integrity protection functions, and the terminal side uses a single PDCP module.
3. SDAP has a simple function and is currently deployed on the user plane. Each data packet needs to contain the mapping relationship between QoSs and DRBs, which increases user plane latency and reduces the proportion of effective information in air interface data transmission, wasting air interface resources.

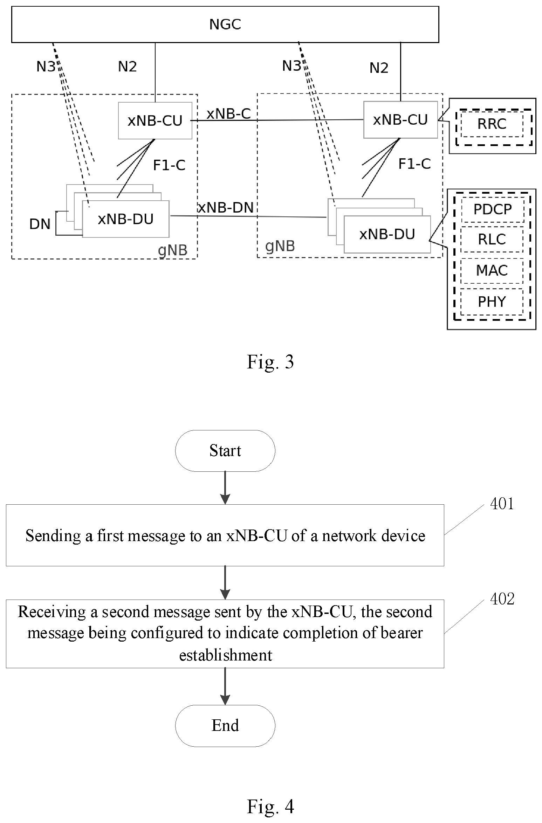

To this end, this disclosure proposes a communication architecture. Referring to Fig. 3, Fig. 3 is a schematic diagram of the communication architecture provided by this disclosure. The base station includes an xNB-CU and an xNB-DU. In this architecture, the xNB-CU corresponds to the Radio Resource Control (RRC) protocol layer; the xNB-DU corresponds to the following protocol layers: PDCP; RLC; MAC; PHY.

Compared to the conventional architecture, the SDAP layer functionality is integrated with the xNB-CU, reducing one data plane layer and reducing the amount of unpacking and packing processing on the base station side, thus reducing the system's processing load. The reduced SDAP header size in each data packet transmitted over the air interface increases the proportion of effective data.

The control plane PDCP (PDCP-C) and user plane PDCP (PDCP-U) functions are merged into a cohesive PDCP functional module, which is then integrated with the xNB-DU data plane functions. Encryption and integrity protection functions and algorithms for signaling and data are normalized and processed within the xNB-DU, thereby simplifying the architecture and data processing functions and optimizing the signaling flow.

The architecture adjustment caused changes to the F1 interface functionality. Since the xNB-CU in this architecture only contains control plane functionality, there is no data packet exchange between the xNB-CU and xNB-DU. Therefore, the interface between the xNB-CU and xNB-DU only has control capabilities and no data capabilities. The interface representation follows the expression method of F1-C.

The architecture adjustment caused changes to the XN interface functionality. Since the xNB-CU in this architecture only contains control plane functionality, there is no need for data interaction between xNB-CU and xNB-DU. Therefore, the interface between xNB-CU and xNB-DU only has control capabilities and no data capabilities. The interface representation follows the expression method of xNB-C.

The core network directly performs data flow interaction with the xNB-DU; by adding a new Data Network (DN) interface between xNB-DUs, xNB-DU cell handover, multi-cell data aggregation, and offloading functions are realized. The Radio Access Network (RAN) control and user plane are completely separated, and RAN functions are divided into a control plane node and a user plane node.

As can be seen from the above architecture, this architecture can achieve complete separation between the data plane and the user plane. The xNB-DU directly exchanges data with the core network user plane, shortening the data transmission path and reducing latency.

Since there is only one control interface XN-C between control planes, only one data interface DN between data planes, and only one control interface F1-C between the control plane and data plane, this architecture is simpler. The introduction of direct interfaces between DUs establishes direct communication interface between different user plane layers, increasing system flexibility.

This architecture also has certain engineering advantages. In the current 5G user plane protocol design framework, data storage and transmission functions exist in the PDCP layer, RLC layer, and F1-U layer, resulting in a 1:3 ratio between transmitted data and data storage. This poses a significant challenge to system memory and CPU processing, especially for high speed 6G systems. Under the architecture of this disclosure, the ratio of data transmission to data storage is 1:1.

Because the SDAP module of CU-UP is merged into xNB-CU, and PDCP-C and PDCP-U are merged and moved down to xNB-DU, the impact of this architecture on bearer establishment includes: a reduction in uplink and downlink data link tunnels, from two pairs to one; and a reduction in message flow; signaling and data encryption are all completed in xNB-DU; and a reduction in the header processing of QoS flow ID in the user plane.

Step 102: interacting, by the xNB-CU, with the xNB-DU based on the first message, to execute a bearer establishment process.

The process may include: the xNB-CU sends a third message to the xNB-DU, the third message including information of an uplink data transmission channel over N3 interface; the xNB-DU interacts with a terminal based on the third message to establish a bearer; and the xNB-DU sends a fourth message to the xNB-CU, the fourth message indicating the completion of bearer establishment.

The third message may be a UE context modification request (UE CONTEXT MODIFICATION REQUEST), and the fourth message may be a UE context modification response (UE CONTEXT MODIFICATION RESPONSE).

Interacting, by the xNB-DU, with a terminal based on the third message to establish a bearer includes:
the xNB-DU generates, encodes, and encrypts the fifth message based on the third message, and the fifth message is configured to indicate that a bearer is to be established; the xNB-DU sends the fifth message to the terminal; and the xNB-DU receives the sixth message sent by the terminal.

The fifth message may be an RRC reconnection (RRCReconnection) message, and the sixth message may be an RRC reconnection complete (RRCReconnectionComplete) message.

In this embodiment of the disclosure, the fourth message includes: information of one or more DRB-based downlink data transmission channels (DL QoS Flow per TNL Information List) allocated by the xNB-DU. The fifth message includes: the mapping relationship between DRBs and QoS flows. That is, the field corresponding to the default DRB is a required field of the DRB, used to indicate the mapping relationship between DRBs and QoS flows to the terminal.

Step 103: sending, by the xNB-CU, a second message to the core network device, the second message being configured to indicate completion of bearer establishment.

The second message may be a PDU session resource setup response message.

In this embodiment, the network device includes an xNB-CU and an xNB-DU. During bearer establishment, the xNB-CU receives a first message from the core network device and interacts with the xNB-DU to execute the bearer establishment process. Afterward, the xNB-CU sends a second message to the core network device, indicating that the bearer establishment is completed. As can be seen from the above description, by achieving complete separation between the data plane and the user plane, signaling resources during the bearer establishment process can be reduced.

Referring to Fig. 4, Fig. 4 is a flowchart of a communication method according to an embodiment of this disclosure. The method is performed by a core network device. As shown in Fig. 4, the method includes the following steps 401 and 402.

Step 401: sending a first message to an xNB-CU of a network device.

The core network device may be, for example, an Access and Mobility Management Function (AMF).

Step 402: receiving a second message sent by the xNB-CU, the second message being configured to indicate completion of bearer establishment.

The first message includes one or more of the following:
information of an uplink data transmission channel over N3 interface;
information of a QoS flow carried on the channel.

The second message includes information of one or more DRB-based downlink data transmission channels allocated by the xNB-DU of the network device.

In this embodiment, the network device includes an xNB-CU and an xNB-DU. During bearer establishment, the xNB-CU receives a first message from the core network device and interacts with the xNB-DU to execute the bearer establishment process. Afterward, the xNB-CU sends a second message to the core network device, indicating that the bearer establishment is completed. As can be seen from the above description, by achieving complete separation between the data plane and the user plane, signaling resources during the bearer establishment process can be reduced.

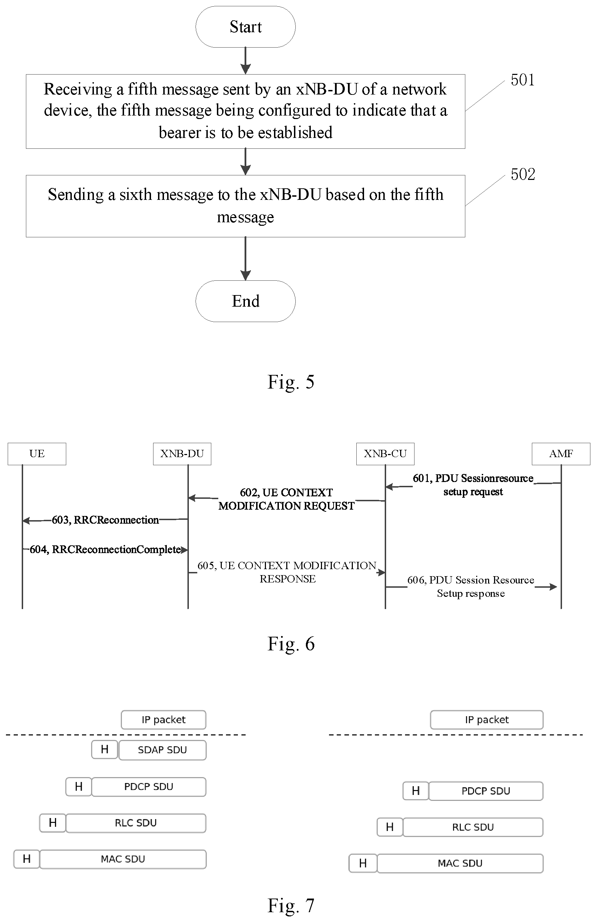

Referring to Fig. 5, Fig. 5 is a flowchart of a communication method according to an embodiment of this disclosure. The method is performed by a terminal. As shown in Fig. 5, the method includes the following steps 501 and 502.

Step 501: receiving a fifth message sent by an xNB-DU of a network device, the fifth message being configured to indicate that a bearer is to be established.

Step 502: sending a sixth message to the xNB-DU based on the fifth message.

The xNB-DU of the network device sends the fifth message in response to a triggering of an xNB-CU of the network device; the xNB-CU triggers the xNB-DU of the network device to send the fifth message upon receiving a first message from a core network device.

The fifth message can be an RRC reconnection (RRCReconnection) message, and the sixth message can be an RRC reconnection complete (RRCReconnectionComplete) message. The fifth message includes a mapping relationship between data radio bearers (DRBs) and QoS flows.

In this embodiment, the network device includes an xNB-CU and an xNB-DU. During bearer establishment, the xNB-CU receives a first message from the core network device and interacts with the xNB-DU to execute the bearer establishment process. Afterward, the xNB-CU sends a second message to the core network device, indicating that the bearer establishment is completed. As can be seen from the above description, by achieving complete separation between the data plane and the user plane, signaling resources during the bearer establishment process can be reduced.

Referring to Fig. 6, Fig. 6 is a schematic diagram of a bearer establishment process under the architecture according to this disclosure. The bearer establishment process may include the following steps 601 to 606.

Step 601: an Access and Mobility Management Function (AMF) of the core network sends a session resource setup request (PDU Sessionresource setup request) message to the xNB-CU. This message carries: information of the uplink data transmission channel over N3 interface allocated by the core network (UL NG-U UP TNL Information), and information of the QoS flow carried on the channel (QoS Flow Setup Request List).

Step 602: xNB-CU sends a UE CONTEXT MODIFICATION REQUEST message to xNB-DU. This message transparently transmits the information of the uplink data transmission channel over N3 interface allocated by the core network (UL NG-U UP TNL Information) to xNB-DU. At the same time, since the encryption function is in xNB-DU, xNB-CU generates information related to air interface reconfiguration message, and send the information to xNB-DU through the UE CONTEXT MODIFICATION REQUEST message.

Step 603: The xNB-DU completes the generation, encoding, and encryption of the RRCReconnection message and sends the RRCReconnection message to the terminal. This message carries a field indicating mapping between the DRBs and QoS flows. Here, by enhancing the air interface message, the default DRB field of this message in the conventional architecture is used as a mandatory field of the DRB, to indicate the mapping relationship between the terminal's DRBs and QoS flows.

Step 604: The terminal sends an RRCReconnectionComplete message to the xNB-DU, indicating that the air interface reconfiguration is completed (or the bearer establishment is completed).

Step 605: The xNB-DU sends a UE CONTEXT MODIFICATION RESPONSE message to the xNB-CU. This message carries information of the DRB-based downlink data transmission channel allocated by the xNB-DU. A field is added to the UE CONTEXT MODIFICATION RESPONSE message to indicate the completion of the air interface reconfiguration (or bearer establishment) process.

Step 606: The xNB-CU determines that the air interface reconfiguration (or bearer establishment) process is completed, and sends a PDU Session Resource Setup response message to the AMF. This message contains information of the downlink data transmission channel at the downlink DRB level allocated by the xNB-DU (DL QoS Flow per TNL Information). This information has been modified from a single DL TNL information to a DL QoS Flow per TNL Information list, realizing the mapping from QoS flow IDs to DRBs through DL TNL.

Based on the transport network layer (TNL) address design in the aforementioned process, the mapping between QoS flows and DRBs is distinguished at the base station using the TNL addresses of the data transmission channels, replacing the previous method that relied on explicit indications within each data packet. At the same time, on the network side, the mapping between QoS flows and DRBs is completed by explicit configuration of the terminal, replacing the method of explicit indication in the packet header, thereby reducing the packet header size, saving air interface resources, and shortening the data packet processing flow.

Figs. 7(a) and 7(b) show the packet header under the conventional architecture and the packet header under the architecture according to the embodiment of this disclosure, where H represents the packet header field. A comparison shows that under the architecture according to the embodiment of this disclosure, the user plane protocol header has one less layer of configuration than the user plane protocol header under the conventional architecture.

It can be seen that the system architecture proposed in this disclosure, which completely separates the control plane and the user plane, reduces air interface data packet header information and removes redundant interfaces of the 5G higher layer protocol stack, making it more advantageous for engineering implementation. Therefore, it has great value for protocol architecture and engineering practice.

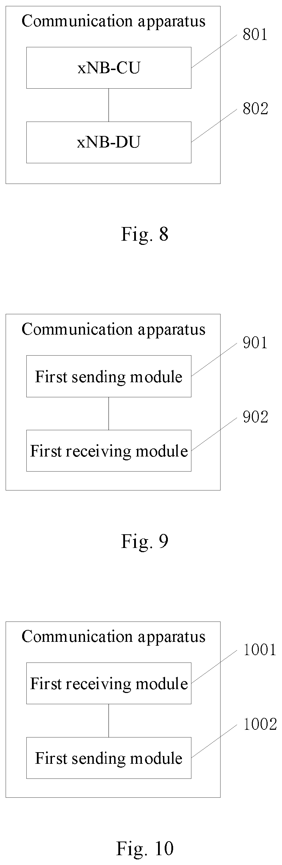

Referring to Fig. 8, Fig. 8 is a structural diagram of a communication apparatus according to an embodiment of this disclosure. The communication apparatus is applied to a network device. The network device includes a centralized unit xNB-CU 801 and a distributed unit xNB-DU 802.

The xNB-CU 801 is configured to receive a first message from the core network device;
the xNB-CU 801 is configured to interact with the xNB-DU based on the first message to execute the bearer establishment process;
the xNB-CU 801 is configured to send a second message to the core network device, the second message being configured to indicate completion of bearer establishment.

Optionally, the first message includes one or more of the following:
information of an uplink data transmission channel over N3 interface;
information of a QoS flow carried on the channel.

Optionally, the xNB-CU 801 is further configured to send a third message to the xNB-DU, the third message including information of an uplink data transmission channel over N3 interface;
the xNB-DU 802 is further configured to interact with the terminal based on the third message to establish a bearer;
the xNB-DU 802 is further configured to send a fourth message to the xNB-CU, the fourth message being configured to indicate the completion of bearer establishment.

Optionally, the xNB-DU 802 is further configured to, based on the third message, complete the generation, encoding, and encryption of a fifth message, wherein the fifth message is configured to indicate that a bearer is to be established;
the xNB-DU 802 is further configured to send the fifth message to the terminal;
the xNB-DU 802 is further configured to receive a sixth message sent by the terminal.

Optionally, the fifth message includes:
a mapping relationship between DRBs and QoS flows.

Optionally, the fourth message includes:
information of one or more DRB-based downlink data transmission channels allocated by the xNB-DU.

Optionally, the second message includes information of one or more DRB-based downlink data transmission channels allocated by the xNB-DU.

Optionally, the xNB-CU corresponds to the RRC protocol layer;
the xNB-DU corresponds to the following protocol layers:
PDCP;
RLC;
MAC;
PHY.

The apparatus provided in this embodiment can execute the above method embodiment, and its implementation principle and technical effect are similar, so it will not be described again here.

Referring to Fig. 9, Fig. 9 is a structural diagram of a communication apparatus according to an embodiment of this disclosure. The apparatus is applied to a core network device. As shown in Fig. 9, the communication apparatus includes:
a first sending module 901, configured to send a first message to an xNB-CU of a network device;
a first receiving module 902, configured to receive a second message sent by the xNB-CU, the second message being configured to indicate completion of bearer establishment.

Optionally, the first message includes one or more of the following:
information of an uplink data transmission channel over N3 interface;
information of a QoS flow carried on the channel.

Optionally, the second message includes information of one or more DRB-based downlink data transmission channels allocated by an xNB-DU of the network device.

The apparatus provided in this embodiment can execute the above method embodiment, and its implementation principle and technical effect are similar, so it will not be described again here.

Referring to Fig. 10, Fig. 10 is a structural diagram of a communication apparatus according to an embodiment of this disclosure. The apparatus is applied to a terminal. As shown in Fig. 10, the communication apparatus includes:
a first receiving module 1001, configured to receive a fifth message sent by an xNB-DU of a network device, the fifth message being configured to indicate that a bearer is to be established; a first sending module 1002, configured to send a sixth message to the xNB-DU based on the fifth message;
wherein the xNB-DU of the network device sends the fifth message in response to a triggering of an xNB-CU of the network device; the xNB-CU triggers the xNB-DU of the network device to send the fifth message upon receiving a first message from a core network device.

Optionally, the fifth message includes:
a mapping relationship between DRBs and QoS flows.

The apparatus provided in this embodiment can execute the above method embodiment, and its implementation principle and technical effect are similar, so it will not be described again here.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to the prior art, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

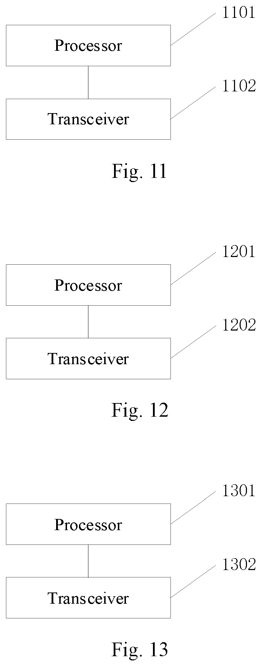

Referring to Fig. 11, Fig. 11 is a schematic diagram of a communication apparatus according to an embodiment of the present disclosure. The apparatus is applied to a network device. The network device includes a processor 1101 and a transceiver 1102;
the processor 1101 is configured to receive a first message from the core network device via an xNB-CU of the network device; interact with an xNB-DU of the network device via the xNB-CU based on the first message to execute a bearer establishment process, and send a second message to the core network device via the xNB-CU, the second message being configured to indicate completion of bearer establishment.

Optionally, the first message includes one or more of the following:
information of an uplink data transmission channel over N3 interface;
information of a QoS flow carried on the channel.

Optionally, the processor 1101 is further configured to:
send, via the xNB-CU, a third message to the xNB-DU, the third message including information of an uplink data transmission channel over N3 interface;
interact, via the xNB-DU, with a terminal based on the third message to establish a bearer;
send, via the xNB-DU, a fourth message to the xNB-CU, the fourth message indicating the completion of bearer establishment.

Optionally, the processor 1101 is further configured to:
complete, via the xNB-DU, generation, encoding, and encryption of a fifth message based on the third message, the fifth message being configured to indicate that the bearer is to be established;
send, via the xNB-DU, the fifth message to the terminal; and
receive, via the xNB-DU, a sixth message sent by the terminal.

Optionally, the fifth message includes:
a mapping relationship between DRBs and QoS flows.

Optionally, the fourth message includes:
information of one or more DRB-based downlink data transmission channels allocated by the xNB-DU.

Optionally, the second message includes information of one or more DRB-based downlink data transmission channels allocated by the xNB-DU.

Optionally, the xNB-CU corresponds to the RRC protocol layer;
the xNB-DU corresponds to the following protocol layers:
PDCP;
RLC;
MAC;
PHY.

The apparatus provided in this embodiment can execute the above method embodiment, and its implementation principle and technical effect are similar, so it will not be described again here.

Referring to Fig. 12, Fig. 12 is a schematic diagram of a communication apparatus according to an embodiment of the present disclosure. The apparatus is applied to a network device. The network device includes a processor 1201 and a transceiver 1202;
the processor 1201 is configured to send a first message to an xNB-CU of the network device, and receive a second message sent by the xNB-CU, the second message being configured to indicate completion of bearer establishment.

Optionally, the first message includes one or more of the following:
information of an uplink data transmission channel over N3 interface;
information of a QoS flow carried on the channel.

Optionally, the second message includes information of one or more DRB-based downlink data transmission channels allocated by an xNB-DU of the network device.

The apparatus provided in this embodiment can execute the above method embodiment, and its implementation principle and technical effect are similar, so it will not be described again here.

Referring to Fig. 13, Fig. 13 is a schematic diagram of a communication apparatus according to an embodiment of the present disclosure. The apparatus is applied to a network device. The network device including a processor 1301 and a transceiver 1302;
the processor 1301 is configured to receive a fifth message sent by an xNB-DU of a network device, the fifth message being configured to indicate that a bearer is to be established, and the processor 1301 is configured to send a sixth message to the xNB-DU based on the fifth message;
wherein the xNB-DU of the network device sends the fifth message in response to a triggering of an xNB-CU of the network device; the xNB-CU triggers the xNB-DU of the network device to send the fifth message upon receiving a first message from a core network device.

Optionally, the fifth message includes:
a mapping relationship between data radio bearers DRBs and QoS flows.

The apparatus provided in this embodiment can execute the above method embodiment, and its implementation principle and technical effect are similar, so it will not be described again here.

An embodiment of this disclosure provides a communication device, including: a memory, a processor, and a program stored in the memory and executable on the processor; the processor is configured to read the program from the memory to implement the steps in the communication methods described above.

An embodiment of this disclosure also provides a readable storage medium storing a program. When executed by a processor, this program implements the various processes of the above-described communication method embodiments and achieves the same technical effects. To avoid repetition, further details are omitted here. The readable storage medium can be any available medium or data storage device accessible to the processor, including but not limited to magnetic storage (e.g., floppy disks, hard disks, magnetic tapes, magneto-optical discs (MO), etc.), optical storage (e.g., compact discs (CDs), digital video discs (DVDs), Blu-ray discs (BD), high-definition versatile discs (HVD), etc.), and semiconductor storage (e.g., ROMs, erasable programmable read-only memory (EPROM), electrically erasable programmable read-only memory (EEPROM), non-volatile memory (NAND FLASH), solid-state disks (SSDs), etc.).

An embodiment of this disclosure also provides a computer program product, including computer instructions, wherein the computer instructions, when executed by a processor, implement the steps in the communication methods described above.

It should be noted that, in this document, the terms "including", "comprising", or any other variations thereof are intended to cover non-exclusive inclusion, such that a process, method, article, or apparatus that includes a list of elements includes not only those elements but also other elements not expressly listed, or elements inherent to such a process, method, article, or apparatus. Unless otherwise specified, an element defined by the phrase "including one..." does not exclude the presence of other identical elements in the process, method, article, or apparatus that includes that element.

Through the above description of the embodiments, those skilled in the art can clearly understand that the methods of the above embodiments can be implemented by means of software plus necessary general-purpose hardware platforms. Of course, they can also be implemented by hardware, but in many cases the former is a better implementation method. Based on this understanding, the technical solution of this disclosure, in essence, or the part that contributes to the prior art, can be embodied in the form of a software product. This computer software product is stored in a storage medium (such as ROM/RAM, magnetic disk, optical disc) and includes several instructions to cause a terminal (which may be a mobile phone, computer, server, air conditioner, or network device, etc.) to execute the methods described in the various embodiments of this disclosure.

Embodiments of this disclosure have been described above with reference to the accompanying drawings. However, this disclosure is not limited to the specific embodiments described above. The specific embodiments described above are merely illustrative and not restrictive. Those skilled in the art can make many other forms under the guidance of this disclosure without departing from the spirit and scope of the claims, and all of these forms are within the scope of this disclosure.

## Claims

1. A communication method performed by a network device, the network device comprising a centralized unit xNB-CU and a distributed unit xNB-DU, wherein the method comprises:
receiving, by the xNB-CU, a first message from a core network device;
interacting, by the xNB-CU, with the xNB-DU based on the first message, to execute a bearer establishment process; and
sending, by the xNB-CU, a second message to the core network device, the second message being configured to indicate completion of bearer establishment.

2. The method according to claim 1, wherein the first message comprises one or more of the following:
information of an uplink data transmission channel over N3 interface;
information of a quality of service QoS flow carried on the channel.

3. The method according to claim 1, wherein interacting, by the xNB-CU, with the xNB-DU based on the first message to execute the bearer establishment process comprises:
sending, by the xNB-CU, a third message to the xNB-DU, the third message comprising information of an uplink data transmission channel over N3 interface;
interacting, by the xNB-DU, with a terminal based on the third message to establish a bearer; and
sending, by the xNB-DU, a fourth message to the xNB-CU, the fourth message being configured to indicate the completion of bearer establishment.

4. The method according to claim 3, wherein interacting, by the xNB-DU, with the terminal based on the third message to establish the bearer comprises:
completing, by the xNB-DU, generation, encoding, and encryption of a fifth message based on the third message, the fifth message being configured to indicate that the bearer is to be established;
sending, by the xNB-DU, the fifth message to the terminal; and
receiving, by the xNB-DU, a sixth message sent by the terminal.

5. The method according to claim 3, wherein the fourth message comprises:
information of one or more data radio bearer DRB-based downlink data transmission channels allocated by the xNB-DU.

6. The method according to claim 4, wherein the fifth message comprises:
a mapping relationship between DRBs and QoS flows.

7. The method according to claim 1, wherein the second message comprises information of one or more DRB-based downlink data transmission channels allocated by the xNB-DU.

8. The method according to claim 1, wherein,
the xNB-CU corresponds to a radio resource control RRC protocol layer; and
the xNB-DU corresponds to the following protocol layers:
packet data convergence protocol PDCP;
radio link control RLC;
media access control MAC;
physical layer PHY.

9. A communication method performed by a core network device, wherein the method comprises:
sending a first message to an xNB-CU of a network device; and
receiving a second message sent by the xNB-CU, the second message being configured to indicate completion of bearer establishment.

10. The method according to claim 9, wherein the first message comprises one or more of the following:
information of an uplink data transmission channel over N3 interface;
information of a QoS flow carried on the channel.

11. The method according to claim 9, wherein the second message comprises information of one or more DRB-based downlink data transmission channels allocated by an xNB-DU of the network device.

12. A communication method performed by a terminal, wherein the method comprises:
receiving a fifth message sent by an xNB-DU of a network device, the fifth message being configured to indicate that a bearer is to be established; and
sending a sixth message to the xNB-DU based on the fifth message;
wherein the xNB-DU of the network device sends the fifth message in response to a triggering of an xNB-CU of the network device; the xNB-CU triggers the xNB-DU of the network device to send the fifth message upon receiving a first message from a core network device.

13. The method according to claim 12, wherein the fifth message comprises:
a mapping relationship between DRBs and QoS flows.

14. A communication apparatus applied to a network device, the network device comprising a centralized unit xNB-CU and a distributed unit xNB-DU; wherein
the xNB-CU is configured to receive a first message from a core network device;
the xNB-CU is configured to interact with the xNB-DU based on the first message to execute a bearer establishment process;
the xNB-CU is configured to send a second message to the core network device, the second message being configured to indicate completion of bearer establishment.

15. A communication apparatus applied to a core network device, the apparatus comprising:
a first sending module, configured to send a first message to an xNB-CU of a network device; and
a first receiving module, configured to receive a second message sent by the xNB-CU, the second message being configured to indicate completion of bearer establishment.

16. A communication apparatus applied to a terminal, the apparatus comprising:
a first receiving module, configured to receive a fifth message sent by an xNB-DU of a network device, the fifth message being configured to indicate that a bearer is to be established;
a first sending module, configured to send a sixth message to the xNB-DU based on the fifth message;
wherein the xNB-DU of the network device sends the fifth message in response to a triggering of an xNB-CU of the network device; the xNB-CU triggers the xNB-DU of the network device to send the fifth message upon receiving a first message from a core network device.

17. A communication apparatus applied to a network device, the network device comprising a processor and a transceiver; wherein
the processor is configured to receive a first message from a core network device via an xNB-CU of the network device, interact with an xNB-DU of the network device via the xNB-CU based on the first message to execute a bearer establishment process, and send a second message to the core network device via the xNB-CU, the second message being configured to indicate completion of bearer establishment.

18. A communication apparatus applied to a core network device, the apparatus comprising a processor and a transceiver; wherein
the processor is configured to send a first message to an xNB-CU of a network device, and receive a second message sent by the xNB-CU, the second message being configured to indicate completion of bearer establishment.

19. A communication apparatus applied to a terminal, the apparatus comprising a processor and a transceiver; wherein
the processor is configured to receive a fifth message sent by an xNB-DU of a network device, the fifth message being configured to indicate that a bearer is to be established, and the processor is configured to send a sixth message to the xNB-DU based on the fifth message;
wherein the xNB-DU of the network device sends the fifth message in response to a triggering of an xNB-CU of the network device; the xNB-CU triggers the xNB-DU of the network device to send the fifth message upon receiving a first message from a core network device.

20. A communication device, comprising: a memory, a processor, and a program stored in the memory and executable on the processor, wherein the processor is configured to read the program from the memory to implement the steps of the communication method according to any one of claims 1 to 13.

21. A readable storage medium storing a program, wherein the program, when executed by a processor, implements the steps of the communication method according to any one of claims 1 to 13.

22. A computer program product comprising computer instructions, wherein the computer instructions, when executed by a processor, implement the steps of the communication method according to any one of claims 1 to 13.
